# EUROPÄISCHE PATENTSCHRIFT

(11) **EP 1 303 809 B1**
(45) Veröffentlichungstag und Bekanntmachung des Hinweises auf die Patenterteilung: **06.04.2005**
(21) Anmeldenummer: 01960111.1
(22) Anmeldetag: 06.07.2001
(51) Int. Cl.: G06F 9/00

(54) **VERFAHREN UND VORRICHTUNG ZUR MESSUNG DER LAUFZEIT EINER TASK IN EINEM ECHTZEITSYSTEM**
METHOD AND DEVICE FOR MEASURING THE EXECUTION TIME OF A TASK IN A REAL TIME SYSTEM
PROCEDE ET DISPOSITIF DE MESURE DE LA DUREE D'UNE TACHE DANS UN SYSTEME TEMPS REEL

(30) Priorität: 15.07.2000 DE 10034459
(43) Veröffentlichungstag der Anmeldung: 23.04.2003
(73) Patentinhaber: ROBERT BOSCH GMBH, 70442 Stuttgart (DE)
(72) Erfinder: PISECKY, Manfred, A-1220 Wien (AT)
(86) Internationale Anmeldenummer: PCT/DE2001/002516
(87) Internationale Veröffentlichungsnummer: WO 2002/006949

(56) Entgegenhaltungen:
- WO-A-98/52122
- JP-A- 2 271 437
- JP-A- 3 210 643
- US-A- 5 732 272
- "TASK MEASURING MECHANISM FOR MULTI-TASKING DIGITAL SIGNAL PROCESSING" IBM TECHNICAL DISCLOSURE BULLETIN, IBM CORP. NEW YORK, US, Bd. 37, Nr. 6B, 1. Juni 1994 (1994-06-01), Seiten 371-372, XP000456036 ISSN: 0018-8689
- BLASCIAK A J ET AL: "SOFTWARE PERFORMANCE ANALYSIS OF REAL-TIME EMBEDDED SYSTEMS" HEWLETT-PACKARD JOURNAL, HEWLETT-PACKARD CO. PALO ALTO, US, Bd. 44, Nr. 2, 1. April 1993 (1993-04-01), Seiten 107-115, XP000360991

## Beschreibung

### Stand der Technik

Die vorliegende Erfindung betrifft ein Verfahren und eine Vorrichtung zur Messung der Laufzeit einer Task in einem Echtzeitsystem, insbesondere einem Echtzeitbetriebssystem. Als typische Echtzeitbetriebssysteme seien beispielsweise RCOS oder ERCOS genannt.

Unter einer Task versteht man einen ablauffähigen Programmteil innerhalb eines Echtzeitsystems. Die Summe aller Tasks ergibt das gesamte Echtzeitsystem. Man spricht dann auch von einem Multitaskingsystem. Ein Echtzeitssystem ist ein Computerprogramm, an dessen Zeitverhalten strenge Anforderungen gerichtet sind. So muß sichergestellt sein, daß das Programm innerhalb einer vorgegebenen Zeitspanne auf bestimmte Ereignisse reagiert. Echtzeitsysteme und insbesondere Echtzeitbetriebssysteme finden vorwiegend bei sicherheitskritischen Systemen Anwendung.

Um ein gewünschtes zeitliches Verhalten des gesamten Systems sicherzustellen, muß gewährleistet sein, daß jede Task bestimmte zeitliche Vorgaben einhält. Die Tasks in einem Echtzeitsystem besitzen dabei unterschiedliche Zeitanforderungen, sogenannte Deadlines. Diese stellen sich als unterschiedliche Prioritäten dar. Es wird angenommen, daß Tasks höherer Priorität solche mit niedrigerer Priorität unterbrechen können. Das bedeutet, daß sobald eine höherwertige Task zum Ablauf kommt, diese den Ablauf einer niederwertigeren Task unterbricht.

Um das Zeitverhalten des gesamten Systems zu bestimmen und gegebenenfalls zu modifizieren, ist es notwendig, die Laufzeit jeder einzelnen Task im Laufe der Programmentwicklung, in der Testphase und auch während des Betriebs des gesamten Systems, insbesondere bei nachträglichen Programmänderungen, zu messen.

Bekannt ist es, die Laufzeit einer Task manuell zu ermitteln. Dies wird beispielsweise mit Hilfe eines CPU-Emulators durchgeführt. Hierbei stellt sich das Problem, daß es beim Messen der Laufzeit einer Task vorkommt, daß diese durch eine Task mit höherer Priorität unterbrochen wird (preemptives Multitasking). Die gemessene Zeit wird verfälscht, da nicht mehr nur die Laufzeit einer bestimmten Task gemessen wird. Außerdem ist die manuelle Messung sehr zeitaufwendig. Dies erhöht die Kosten und die Dauer der Entwicklung des Programms.

Eine weiteres bekanntes Verfahren zur Messung der Laufzeit einer Task sieht vor, in jeder Task einen Zeitmesser mitlaufen zu lassen. Als Zeitmesser kann beispielsweise ein hochauflösender Hardware-Timer verwendet werden. Aber auch eine reine Softwarelösung ist denkbar. Die Schrittweite des Zeitmessers muß dabei viel kleiner sein als die üblichen Tasklaufzeiten. Auf diese Weise ist zwar sichergestellt, daß die Zeitmessung immer bei Taskbeginn gestartet wird, doch kann mit dieser Methode nur die Bruttolaufzeit der Task, das heißt die eigentliche Laufzeit oder Nettolaufzeit der Task plus die Unterbrechungen durch höherwertigere Tasks gemessen werden. Diese Methode ist zwar weniger arbeitsaufwendig als das zuvor beschriebene manuelle Verfahren, doch sind die ermittelten Ergebnisse nicht wesentlich exakter. Daher ergibt sich auch kein entscheidender Vorteil gegenüber der manuellen Methode.

Aus der EP 0 534 884 A1 ist ein Verfahren zum Überprüfen des Zeitverhaltens eines Multitaskingsystems bekannt. Das Verfahren sieht vor, daß die Laufzeit einzelner Tasks gemessen und gegebenenfalls bei Überschreiten einer vorgebbaren Zeitdauer ein Alarm ausgelöst wird. Die Zeitdauer wird mit Hilfe eines Timers bzw. eines Zählers bestimmt. Dabei wird die Zeitdauer als Vielfaches des Zyklusses des Prozessors bestimmt. Das Multitaskingsystem weist eine Anzahl von Tasks auf, denen allen eine bestimmte Priorität zugeordnet ist. So kann es vorkommen, daß eine niederwertige Task von einer höherwertigeren Task unterbrochen wird. Um sicherzustellen, daß das gesamte Programm die notwendigen Zeitanforderungen einhält, muß es möglich sein, die Laufzeit jeder einzelnen Task zu bestimmen.

Zu Beginn des Ablaufs einer Task, deren Laufzeit in Prozessorzyklen bestimmt werden soll, wird der Zähler gestartet. Der Zähler beginnt bei einem vorgegebenen Wert und verringert nach jedem Zyklus seinen Zustand. Wird eine bestimmte untere Grenze erreicht, wird ein Alarmsignal ausgegeben. Wird die Task durch eine Task mit höherer Priorität unterbrochen, wird der Zähler gestoppt und der aktuelle Zustand gespeichert. Nach Beendigung der Unterbrechung wird der Zähler beginnend vom gespeicherten Zustand erneut gestartet.

Nachteilig bei dem in der EP 0 534 884 A1 beschriebenen Verfahren ist es, daß immer nur die Laufzeit einer Task während eines Meßdurchgangs gemessen werden kann. Erst wenn die Laufzeit der Task bestimmt ist, d. h. die Task beendet ist, kann mit dem Zähler die Laufzeit einer weiteren Task bestimmt werden. Ein Meßdurchgang beginnt mit Beginn des Ablaufs einer Task und deren Beendigung.

Aufgabe der vorliegenden Erfindung ist es daher, ein Verfahren und eine Vorrichtung vorzuschlagen, mit denen eine exakte Messung der Laufzeit einer Task möglich ist und außerdem in einem Meßdurchgang die Laufzeiten mehrerer Tasks bestimmt werden können.

Die Aufgabe bezüglich des Verfahrens wird durch ein Verfahren mit den Merkmalen des Anspruchs 1 gelöst.

Die auf die Vorrichtung bezogene Aufgabe wird durch eine solche mit den Merkmalen des Anspruchs 4 gelöst.

Vorteilhafte Ausgestaltungen der Erfindung ergeben sich aus den Unteransprüchen.

### Vorteile der Erfindung

Das erfindungsgemäße Verfahren dient zur Messung der Laufzeit einer Task in einem Echtzeitsystem mit einer Anzahl von Tasks, welche wenigstens teilweise unterschiedlichen Prioritätsebenen zugeordnet sind. Dabei können die einzelnen Tasks alle in unterschiedlichen Prioritätsebenen ablaufen. Es ist aber auch möglich das einige Tasks in derselben Prioritätsebene bzw. denselben Prioritätsebenen ablaufen. Für die Zeitmessung der Laufzeit ist ein Zeitmesser vorgesehen, dessen Zustand die Laufzeit wiedergibt. Bei Beginn einer Task, deren Laufzeit bestimmt werden soll, wird der Zeitmesser gestartet. Kommt es zu einer Unterbrechung der Task durch eine Task mit höherer Priorität, d. h. zu einem Wechsel der Prioritätsebene, wird der Zeitmesser gestoppt und der aktuelle Zustand gespeichert. Nach Beendigung der Unterbrechung, sobald also die Task, deren Laufzeit. bestimmt werden soll, erneut läuft, wird der gespeicherte Zustand des Zeitmessers restauriert und der Zeitmesser beginnend beim gespeicherten Zustand wieder gestartet, wobei der Zeitmesser während der Unterbrechung der Task die Laufzeit der Task mit der höheren Priorität misst.

Zweckmäßigerweise wird der Zustand des Zeitmessers bei einer Unterbrechung einer ersten Task möglichst früh gespeichert, und nach Beendigung der Unterbrechung möglichst spät, d. h. möglichst unmittelbar vor dem Wiederstart der Task, restauriert. Mit dieser Maßgabe sind besonders genaue Messungen der Nettolaufzeiten einer Task möglich. Dies erweist sich als vorteilhaft, da nicht auszuschließen ist, daß es zu einem systematischen Meßfehler kommen kann, da ein Teil der Prioritätsumschaltung mitgemessen wird, bis der Zustand des Zeitmessers gesichert ist. Gleiches gilt für das Restaurieren eines gespeicherten Zustandes des Zeitmessers. Dadurch, daß der Zustand des Zeitmessers bei einer Unterbrechung so schnell wie möglich gespeichert und nach Beendigung der Unterbrechung so spät wie möglich restauriert wird, läßt sich dieser Fehler minimieren. Dieser Meßfehler ist in jedem Fall deutlich kleiner als der Meßfehler bei Messung der Bruttolaufzeit.

Gemäß der Erfindung wird somit bei Unterbrechung der ersten Task aufgrund einer prioritätshöheren zweiten Task die Laufzeit der zweiten Task während der Unterbrechung der Laufzeit der ersten Task gemessen. Selbstverständlich ist es hierbei möglich, während entsprechenden Unterbrechungen der zweiten Task die Laufzeit einer dritten Task zu messen usw. Es ist so erfindungsgemäß möglich, im wesentlichen während eines Durchlaufs eines Echtzeitsystems die auftretenden Tasks im wesentlichen gleichzeitig zu messen.

Hierdurch wird, wie bereits erwähnt, da die Zeitmessung stets zu Beginn einer Task gestartet und während einer Unterbrechung gestoppt wird, die Nettolaufzeit der Task bzw. Tasks bestimmt.

Für sämtliche Prioritätsebenen ist zweckmäßigerweise nur ein Zeitmesser vorgesehen. Innerhalb einer Prioritätsebene laufen alle Tasks kooperativ, das bedeutet, daß sie sich nicht gegenseitig unterbrechen. Bei einem Wechsel der Prioritätsebene, nämlich bei Beginn einer höherwertigeren Task, wird der Zustand der verwendeten CPU gesichert, damit sich die CPU nach Ende der Unterbrechung im selben Zustand wie vor der Unterbrechung befindet. Außerdem wird bei jedem Prioritätswechsel der Zustand des Zeitmessers gesichert. So können mit einem Zeitmesser in einem Meßdurchgang die Laufzeiten mehrerer Tasks, die in unterschiedlichen Prioritätsebenen laufen, bestimmt werden.

Mit dem erfindungsgemäßen Verfahren lassen sich die Nettolaufzeiten aller Tasks im System einfacher als bisher messen. Der zusätzliche Aufwand besteht im Starten der Messung bei Beginn jeder Task und dem Sichern und Restaurieren des Zeitmessers bei jedem Prioritätswechsel. Alle Unterbrechungen durch andere Tasks werden dabei automatisch ausgeklammert. Ein verbessertes und einfacheres Monitoring der Systemressource Laufzeit ist so möglich. Das Verfahren ist unabhängig vom verwendeten Betriebssystem und der zugrundeliegenden Hardware. Der Ressourcenbedarf an Zeitmessern für die Messung ist unabhängig von der Anzahl der Prioritätsebenen, da nur genau ein Zeitmesser benötigt wird. Es muß jeder Prioritätsebene nur der Platz zum Sichern des Zustands der Messung zur Verfügung gestellt sein. Dies ist für die Implementierung wesentlich, da die Anzahl der verfügbaren Zeitmesser üblicherweise stärker eingeschränkt ist als der verfügbare Speicherplatz.

Die erfindungsgemäße Vorrichtung zur Messung der Laufzeit einer Task in einem Echtzeitsystem mit einer Anzahl von Tasks, von denen jede in einer bestimmten Prioritätsebene abläuft, weist einen Zeitmesser auf. Weiterhin sind Mittel vorgesehen, die ein Starten und Stoppen des Zeitmessers ermöglichen. Dem Zeitmesser steht ein Speicher mit einer Kapazität zur Verfügung, die der Anzahl der Prioritätsebenen angepaßt ist.

Die Vorrichtung zur Messung der Laufzeit ist bevorzugt ein Hardwaretimer. Dieser kann bereits in der CPU implementiert sein.

Vorteilhafterweise ist die Schrittweite des Zeitmessers viel kleiner als die übliche Laufzeit der Tasks. Je kleiner die Schrittweite ist, umso exakter sind die Ergebnisse der Messungen.

Die Erfindung wird anhand der beigefügten Zeichnung näher erläutert. In dieser zeigt:
- Figur 1: den zeitlichen Verlauf des Zustands eines Zeitmessers bei einem herkömmlichen Verfahren;
- Figur 2: den zeitlichen Verlauf des Zustands eines Zeitmessers bei dem erfindungsgemäßen Verfahren;
- Figur 3: eine erfindungsgemäße Vorrichtung in schematischer Darstellung.

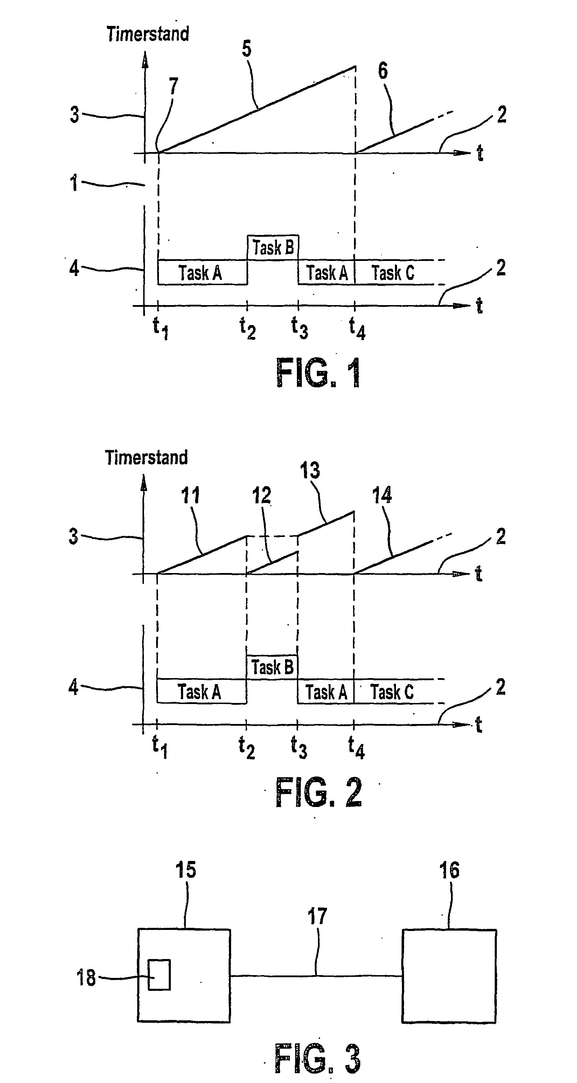

Figur 1 zeigt den zeitlichen Verlauf des Zustands eines Zeitmessers bei einem herkömmlichen Verfahren. Zu erkennen ist ein Graph 1 mit zwei Abszissen 2 und einer ersten Ordinate 3 und einer zweiten Ordinate 4. An den beiden Abszissen 2 ist die Zeit aufgetragen. Mit Hilfe der ersten Ordinate 3 läßt sich der Zustand des Zeitmessers bestimmen. Die zweite Ordinate 4 gibt die Prioritätsebene, in denen die Tasks laufen, wieder. Eine erste Gerade 5 und eine zweite Gerade 6 geben den zeitlichen Verlauf des Zustands des Zeitmessers wieder.

Zum Zeitpunkt t₁ beginnt eine Task A. Deren Prioritätsebene läßt sich anhand der zweiten Ordinate 4 ablesen. Ebenfalls zum Zeitpunkt t₁ wird der Zeitmesser gestartet. Die erste Gerade 5 verdeutlicht die Änderung des Zustands des Zeitmessers mit der Zeit. Zum Zeitpunkt t₂ wird die Task A durch die höherwertigere Task B unterbrochen. Diese läuft auf einer höheren Prioritätsebene. Die Änderung des Zustands des Zeitmessers über der Zeit bleibt, wie die erste Gerade 5 verdeutlicht, davon unbeeinflußt. Zum Zeitpunkt t₃ endet die Task B. Nach Beendigung der Unterbrechung fährt die Task A fort. Zum Zeitpunkt t₄ endet die Task A. Der Zeitmesser wird gestoppt. Der Zustand des Zeitmessers kann an der ersten Ordinate 3 abgelesen werden.

Allerdings gibt der ermittelte Wert nicht die Nettolaufzeit sondern die Bruttolaufzeit der Task A wieder. Nach Beendigung der Task A wird der Zustand des Zeitmessers zurückgesetzt. Eine Task C, welche in der gleichen Prioritätsebene läuft wie die Task A, beginnt. Der Zeitmesser wird erneut gestartet. Die zweite Gerade 6 gibt hierbei den Zustand des Zeitmessers wieder.

Figur 2 zeigt den Graphen 1 aus Figur 1, der den zeitlichen Verlauf des Zustands eines Zeitmessers bei dem erfindungsgemäßen Verfahren wiedergibt. Die zeitliche Abfolge der Tasks A, B und C entspricht der Abfolge in Figur 1. Eine dritte Gerade 11, eine vierte Gerade 12, eine fünfte Gerade 13 und eine sechste Gerade 14 geben den Verlauf des Zustands des Zeitmessers wieder.

Wiederum zum Zeitpunkt t₁ startet die Task A. Der Zeitmesser wird gestartet. Der Zustand ändert sich mit der Zeit entsprechend der dritten Geraden 11. Zum Zeitpunkt t₂ beginnt die Task B. Die Task A wird unterbrochen. Der Zustand des Zeitmessers wird gespeichert und anschließend zurückgesetzt. Während der Laufzeit der Task B gibt die vierte Gerade 12 den Zustand des Zeitmessers wieder. Nach Beendigung der Task B zum Zeitpunkt t₃ kann mit Hilfe der ersten Ordinate 3 der Zustand des Zeitmessers und somit die Laufzeit der Task B bestimmt werden. Nach Beendigung der Task B zum Zeitpunkt t₃ läuft die Task A weiter, wie anhand der fünften Geraden 13 dargestellt. Der zum Zeitpunkt t₂ gespeicherte Zustand wird restauriert, so daß der Zeitmesser beginnend beim gespeicherten Zustand weiterläuft. Nach Beendigung der Task A zum Zeitpunkt t₄ kann der Zustand des Zeitmessers an der ersten Ordinate 3 abgelesen werden. Dieser Zustand ist ein Maß für die Nettolaufzeit der Task A. Nach Beendigung der Task A beginnt die Task C. Diese läuft in derselben Prioritätsebene wie die Task A und konnte bzw. kann deren Ablauf somit nicht unterbrechen. Die sechste Gerade 14 gibt den Verlauf des Zustands des Zeitmessers wieder.

Figur 3 zeigt in einer schematischen Darstellung eine erfindungsgemäße Vorrichtung zum Messen der Laufzeit einer Task. Die Vorrichtung weist einen Zeitmesser 15 und einen Speicher 16 auf, die über eine Datenleitung 17 miteinander verbunden sind. Über die Datenleitung 17 kann der Zeitmesser 15 seinen Zustand in den Speicher 16 ablegen. Im Zeitmesser 15 sind Mittel 18 vorgesehen, die ein Starten und Stoppen des Zeitmessers 15 ermöglichen.

## Patentansprüche

1. Verfahren zur Messung der Laufzeiten von Tasks in einem eine Anzahl von Tasks (A,B,C) umfassenden Echtzeitsystem mittels wenigstens eines Zeitmessers (15), wobei die Tasks (A,B,C) wenigstens teilweise unterschiedlichen Prioritätsebenen zugeordnet sind und der Zeitmesser (15) zu Beginn einer ersten zu messenden Task (A) gestartet wird und nach Beendigung der zu messenden Task gestoppt wird, dadurch gekennzeichnt, dass der Zustand des Zeitmessers (15) im Falle einer Unterbrechung der ersten Task (A) durch eine zweite Task (B) einer höheren Prioritätsebene gespeichert wird und der Zeitmesser (15) bei Fortsetzung der ersten Task (A) ausgehend von dem gespeicherten Zustand wieder gestartet wird, wobei der Zeitmesser (15) während der Unterbrechung der ersten Task (A) die Laufzeit der zweiten Task (B) misst.

2. Verfahren nach Anspruch 1, **dadurch gekennzeichnet, daß** der Zustand des wenigstens einen Zeitmessers (15) bei einer Unterbrechung der ersten Task möglichst früh gespeichert, und nach Beendigung der Unterbrechung möglichst spät restauriert wird.

3. Verfahren nach Anspruch 1 oder 2, **dadurch gekennzeichnet, daß** sämtliche Laufzeitmessungen sämtlicher Tasks unter Verwendung von genau einem Zeitmesser durchgeführt werden, dessen Speicherkapazität der Anzahl der unterschiedlichen Prioritätsebenen der Tasks angepaßt ist.

4. Vorrichtung zur Messung der Laufzeiten von Tasks in einem eine Anzahl von Tasks (A,B,C) umfassenden Echtzeitsystem mit wenigstens einem Zeitmesser (15), wobei die Tasks (A,B,C) wenigstens teilweise unterschiedlichen Prioritätsebenen zugeordnet sind, und Mitteln (18) zum Starten und Stoppen des Zeitmessers (15), die so ausgestaltet sind, daß der Zeitmesser (15) zu Beginn einer ersten zu messenden Task (A) gestartet wird und nach Beendigung der zu messenden Task gestoppt wird, **dadurch gekennzeichnet, daß** ein Speicher (16) enthalten ist, in dem ein Zustand des Zeitmessers (15) gespeichert werden kann und die Mittel zum Starten und Stoppen derart ausgebildet sind und mit dem Speicher derart zusammenwirken, daß der Zustand des Zeitmessers (15) im Falle einer Unterbrechung der ersten Task (A) durch eine zweite Task (B) einer höheren Prioritätsebene gespeichert wird und der Zeitmesser (15) bei Fortsetzung der ersten Task (A) ausgehend von dem gespeicherten Zustand wieder gestartet wird, wobei der Zeitmesser (15) während der Unterbrechung der ersten Task (A) die Laufzeit der zweiten Task (B) misst.

5. Vorrichtung nach Anspruch 4, **dadurch gekennzeichnet, dass** der Speicher (16) so ausgebildet ist, daß seine Speicherkapazität der Anzahl der Prioritätsebenen der Tasks angepaßt ist.

6. Vorrichtung nach Anspruch 4, **dadurch gekennzeichnet, daß** der Zeitmesser ein Hardwaretimer ist.

7. Vorrichtung nach einem der Ansprüche 4 oder 6, **dadurch gekennzeichnet, daß** die Schrittweite des Zeitmessers (15) wesentlich kleiner als die übliche Laufzeit der Tasks ist.

## Claims

1. Method for measuring the execution times of tasks in a real-time system, comprising a number of tasks (A, B, C), using at least one chronometer (15), at least some of the tasks (A, B, C) being associated with different priority levels, and the chronometer (15) being started at the beginning of a first task (A) which is to be measured and being stopped when the task to be measured has ended, **characterized in that** the state of the chronometer (15) is stored if the first task (A) is interrupted by a second task (B) having a higher priority level and the chronometer (15) is started again from the stored state when the first task (A) continues, the chronometer (15) measuring the execution time of the second task (B) during the interruption to the first task (A).

2. Method according to Claim 1, **characterized in that** the state of the at least one chronometer (15) is stored as early as possible if the first task is interrupted, and is restored as late as possible after the end of the interruption.

3. Method according to Claim 1 or 2, **characterized in that** all execution-time measurements for all tasks are performed using just one chronometer whose storage capacity matches the number of different priority levels for the tasks.

4. Apparatus for measuring the execution times of tasks in a real-time system, comprising a number of tasks (A, B, C), having at least one chronometer (15), at least some of the tasks (A, B, C) being associated with different priority levels, and means (18) for starting and stopping the chronometer (15) which are in a form such that the chronometer (15) is started at the beginning of a first task (A) which is to be measured and is stopped when the task to be measured has ended, **characterized in that** it contains a memory (16) which can be used to store a state for the chronometer (15), and the means for starting and stopping are designed such and interact with the memory such that the state of the chronometer (15) is stored if the first task (A) is interrupted by a second task (B) having a higher priority level and the chronometer (15) is started again from the stored state when the first task (A) continues, the chronometer (15) measuring the execution time of the second task (B) during the interruption to the first task (A).

5. Apparatus according to Claim 4, **characterized in that** the memory (16) is designed such that its storage capacity matches the number of priority levels for the tasks.

6. Apparatus according to Claim 4, **characterized in that** the chronometer is a hardware timer.

7. Apparatus according to either of Claims 4 and 6, **characterized in that** the step size of the chronometer (15) is much shorter than the normal execution time of the tasks.

## Revendications

1. Procédé de mesure de la durée de tâches dans un système à temps réel comprenant un certain nombre de tâches (A, B, C), en utilisant au moins un chronomètre (15), les tâches (A, B, C) étant associées au moins en partie à des niveaux de priorité différents et le chronomètre (15) démarrant au début d'une première tâche à mesurer (A) pour s'arrêter à l'achèvement de cette tâche,
**caractérisé en ce que**
l'état du chronomètre (15), dans le cas d'une interruption de la première tâche (A) par une deuxième tâche (B) d'un niveau de priorité plus élevé, est mis en mémoire, et ce chronomètre (15) quand la première tâche (A) se poursuit, est démarré à nouveau à partir de son état mis en mémoire, de sorte que cet appareil (15) mesure le temps d'écoulement de la deuxième tâche (B) pendant l'interruption de la première tâche (A).

2. Procédé selon la revendication 1,
**caractérisé en ce que**
l'état de l'au moins un chronomètre (15), lorsque la première tâche est interrompue, est mis en mémoire le plus tôt possible et, après la fin de l'interruption, il est restauré le plus tard possible.

3. Procédé selon la revendication 1 ou 2,
**caractérisé en ce que**
les mesures des temps d'exécution de toutes les tâches sont effectuées en utilisant précisément un chronomètre dont la capacité de mémorisation est adaptée au nombre des niveaux différents de priorité des tâches.

4. Dispositif de la mesure des durées d'exécution de tâches dans un système à temps réel comprenant un certain nombre de tâches (A, B, C), en utilisant au moins un chronomètre (15), les tâches (A, B, C) étant associées au moins en partie à des niveaux de priorité différents, ainsi que des moyens (18) pour démarrer et arrêter le chronomètre (15) constitués de manière que le chronomètre (15) est démarré au début d'une première tâche à mesurer (A) et arrêté après l'achèvement de cette tâche,
**caractérisé en ce qu'**
il contient une mémoire (16) dans laquelle peut être enregistré un état du chronomètre (15), les moyens de démarrage et d'arrêt sont constitués et coopèrent avec la mémoire de manière que l'état du chronomètre (15) est enregistré, dans le cas où la première tâche (A) est interrompue par une deuxième tâche (B) d'un niveau de priorité plus élevé, et le chronomètre, quand la première tâche (A) se poursuit, est démarré à nouveau à partir de l'état mis en mémoire et mesure la durée de fonctionnement de la deuxième tâche (B) pendant l'interruption de la première tâche (A).

5. Dispositif selon la revendication 4,
**caractérisé en ce que**
la mémoire (16) est constituée de manière que sa capacité est adaptée au nombre des niveaux de priorité des tâches.

6. Dispositif selon la revendication 4,
**caractérisé en ce que**
le chronomètre est une horloge de calculateur.

7. Dispositif selon la revendication 4 ou 6,
**caractérisé en ce que**
le pas de comptage du chronomètre (15) est nettement plus petit que la durée du déroulement des tâches.
